# EUROPEAN PATENT APPLICATION

(11) **EP 2 876 065 A1**
(43) Date of publication of application: **27.05.2015**
(21) Application number: 12881169.2
(22) Date of filing: 20.07.2012
(51) Int. Cl.: B65G 47/90, B07C 5/34, B25J 13/00

(54) **ROBOT SYSTEM AND ARTICLE TRANSFER METHOD**

(71) Applicant: Kabushiki Kaisha Yaskawa Denki, Kitakyushu-shi, Fukuoka 806-0004 (JP)
(72) Inventor: KOYANAGI, Kenichi, Kitakyushu-shi Fukuoka 806-0004 (JP); MATSUKUMA, Kenji, Kitakyushu-shi Fukuoka 806-0004 (JP); KAWANO, Tomoki, Kitakyushu-shi Fukuoka 806-0004 (JP); AOYAMA, Issei, Kitakyushu-shi Fukuoka 806-0004 (JP)
(74) Representative: Grünecker Patent- und Rechtsanwälte PartG mbB
(86) International application number: PCT/JP2012/068456
(87) International publication number: WO 2014/013608

(57) **Abstract**

To provide a robot system and an article transfer method that can appropriately transfer the articles from a carry-in path into which the articles are successively carried, to a predetermined region of a carry-out path through which the articles are successively carried out. A robot system according to an aspect of an embodiment includes a plurality of robots, an information acquisition unit, and a distribution unit. The robots transfer the articles from the carry-in path into which the articles are successively carried, to the predetermined region of the carry-out path through which the articles are successively carried out. The information acquisition unit acquires information about the predetermined region. The distribution unit distributes the articles in the carry-in path as transfer targets to the robots based on the information acquired by the information acquisition unit.

## Description

### Field

Embodiments disclosed herein relate to a robot system and an article transfer method.

### Background

Conventionally, there is a technique in which an article conveyed on a conveyance path such as a conveyor is taken out from the conveyance path and transferred to another position by a plurality of robots.

For example, Patent Literature 1 discloses a technique in which an article is taken out from a carrying conveyor with a plurality of robots arranged along the carrying conveyor into which articles are successively carried, and the article is transferred to a bucket on a discharging conveyor that carries out the article.

### Citation List

### Patent Literature

Patent Literature 1: Japanese Patent No. 4613440

### Summary

### Technical Problem

However, the technique disclosed in Patent Literature 1 fails to transfer an article to the bucket when another article has already been transferred to the bucket as a transfer destination of the article, or when there is no bucket at a position where the robot releases the article taken out from the carrying conveyor.

That is, in the technique disclosed in Patent Literature 1, the article cannot be appropriately transferred from a carry-in path into which the articles are successively carried, to a predetermined region of a carry-out path through which the articles are successively carried out, in some cases.

An aspect of embodiments is made in view of such a situation, and provides a robot system and an article transfer method for appropriately transferring the articles from the carry-in path into which the articles are successively carried, to a predetermined region of the carry-out path through which the articles are successively carried out.

### Solution to Problem

A robot system according to an aspect of an embodiment includes a plurality of robots, an information acquisition unit, and a distribution unit. The robots transfer the articles from the carry-in path into which the articles are successively carried, to the predetermined region of the carry-out path through which the articles are successively carried out. The information acquisition unit acquires information about the predetermined region. The distribution unit distributes the articles in the carry-in path as transfer targets to the robots based on the information acquired by the information acquisition unit. Advantageous Effects of Invention

According to an aspect of the embodiments, the robot system and the article transfer method can be provided that can appropriately transfer the article from the carry-in path through which the articles are successively carried in, to a predetermined region of the carry-out path through which the articles are successively carried out.

### Brief Description of Drawings

FIG. 1 is an explanatory diagram illustrating a robot system according to a first embodiment.
FIG. 2 is a block diagram illustrating a configuration of the robot system according to the first embodiment.
FIG. 3 is an explanatory diagram illustrating an example of an operation of the robot system according to the first embodiment.
FIG. 4 is an explanatory diagram illustrating an example of the operation of the robot system according to the first embodiment.
FIG. 5 is an explanatory diagram illustrating an example of the operation of the robot system according to the first embodiment.
FIG. 6 is an explanatory diagram illustrating an example of the operation of the robot system according to the first embodiment.
FIG. 7 is an explanatory diagram illustrating an example of the operation of the robot system according to the first embodiment.
FIG. 8 is a flowchart illustrating a process performed by the robot controller according to the first embodiment.
FIG. 9 is a flowchart illustrating a process performed by the robot controller according to the first embodiment.
FIG. 10 is an explanatory diagram illustrating a robot system according to a second embodiment.
FIG. 11 is an explanatory diagram illustrating a robot system according to a third embodiment.
FIG. 12 is a block diagram illustrating a configuration of a robot system according to a fourth embodiment.

### Description of Embodiments

The following describes embodiments of a robot system and an article transfer method disclosed herein in detail with reference to the attached drawings. The present invention is not limited to the following embodiments.

### First embodiment

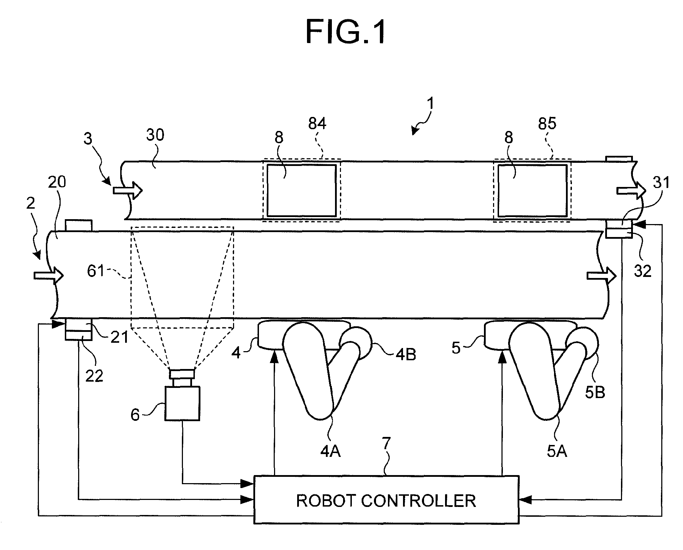

FIG. 1 is an explanatory diagram illustrating a robot system 1 according to a first embodiment. As illustrated in FIG. 1, the robot system 1 includes a plurality of (herein, two) robots 4 and 5 that transfer an article from a carry-in path 2 into which articles as transfer targets are successively carried, to a predetermined region of a carry-out path 3 through which the articles are successively carried out, a sensor 6, and a robot controller 7.

Herein, the carry-in path 2 is a conveyor belt including a carry-in belt 20, a carry-in motor 21, and an encoder 22. The carry-in motor 21 is a servomotor that is connected to a control device (the robot controller 7 in this embodiment) and is operated according to a command input from the robot controller 7 to move the carry-in belt 20 in a conveying direction indicated by void arrows in FIG. 1.

The carry-in path 2 successively carries the articles randomly arranged (random in density in the carry-in direction and/or random in the width direction of the carry-in belt 20) on the carry-in belt 20 on the upstream side, to the downstream side of the conveying direction. The encoder 22 is connected to the control device (the robot controller 7 in this embodiment), and detects a rotational position (conveying position of the article) of the carry-in motor 21 to be output to the robot controller 7.

The carry-out path 3 is a conveyor belt including a carry-out belt 30, a carry-out motor 31, and an encoder 32. The carry-out motor 31 is a servomotor that is connected to the control device (the robot controller 7 in this embodiment), and is intermittently operated according to the command input from the robot controller 7 to intermittently move the carry-out belt 30 in the conveying direction indicated by the void arrows in FIG. 1.

The encoder 32 is connected to the control device (the robot controller 7 in this embodiment), and detects a rotational position (conveying position of the article) of the carry-out motor 31 to be output to the robot controller 7.

On the carry-out belt 30 of the carry-out path 3, containers (hereinafter, referred to as "places 8") that stores the articles transferred from the carry-in path 2 by the robot 4 and the robot 5 are placed at predetermined distance intervals in the conveying direction indicated by the void arrows in FIG. 1.

Specifically, the places 8 are placed on the carry-out belt 30 with an interval substantially the same as an interval between a first region 84 on the carry-out belt 30 to which the robot 4 can transfer the article and a second region 85 on the carry-out belt 30 to which the robot 5 can transfer the article.

The carry-out path 3 causes the carry-out belt 30 to move in the conveying direction according to the command from the robot controller 7, and causes the places 8 to be stopped in the first region 84 and the second region 85 on the carry-out belt 30. The robot 4 and the robot 5 successively transfer the articles from the carry-in path 2 to the places 8 stopped in the first region 84 and the second region 85 on the carry-out belt 30. That is, in this embodiment, each of the places 8 is a destination to which the article transferred from the carry-in path 2 is carried out, in other words, a predetermined region of the carry-out path 3.

Subsequently, when the predetermined number of articles are transferred to the place 8 stopped in the second region 85 on the carry-out belt 30, the carry-out path 3 causes the carry-out belt 30 to move by the interval between the places 8 to be stopped according to the command from the robot controller 7.

By repeating the intermittent movement of the carry-out belt 30, the carry-out path 3 successively carries the places 8 from the upstream side into the first region 84 and the second region 85 on the carry-out belt 30, and successively carries out the places 8 to the downstream side from the first region 84 and the second region 85 on the carry-out belt 30.

In this embodiment, the robot 4 and the robot 5 include robot arms 4A and 5A of single-arm serial link, and end effectors 4B and 5B arranged on tip sides of the robot arms 4A and 5A, respectively. Each of the end effectors 4B and 5B includes, for example, a suction cup for sucking and holding the article by applying a negative pressure with a vacuum pump, and for releasing the article by canceling the application of the negative pressure. A function of each of the end effectors 4B and 5B is not limited to the sucking and holding function. It is sufficient that each of the end effectors 4B and 5B has a mechanism that can hold and convey the article.

The configuration of each of the robot 4 and the robot 5 is not limited to the serial link, and it may have a parallel link mechanism.

The robot 4 and the robot 5 are arranged along one side of the carry-in path 2. Hereinafter, among the robot 4 and the robot 5, the robot 4 arranged on the upstream side of the conveying direction of the article along the carry-in path 2 is referred to as an upstream robot 4, and the robot 5 arranged on the downstream side thereof is referred to as a downstream robot 5. When a specific robot is not designated, the upstream robot 4 and the downstream robot 5 are referred to as the robots 4 and 5.

The upstream robot 4 operates according to the command input from the robot controller 7. The upstream robot 4 takes out the article carried in by the carry-in belt 20 and transfers the article to the place 8 stopped in the first region 84 on the carry-out belt 30. The downstream robot 5 operates according to the command input from the robot controller 7. The downstream robot 5 takes out the article carried in by the carry-in belt 20 and transfers the article to the place 8 stopped in the second region 85 on the carry-out belt 30.

The sensor 6 is a device for detecting a position of the article on the carry-in path 2. In this embodiment, for example, the sensor 6 is an imaging device for imaging the article on the carry-in belt 20. The sensor 6 images the article carried into an imaging region 61 that is defined on a more upstream side than a region in which the upstream robot 4 can take out the article on the carry-in belt 20, and outputs image information of the imaged image to the robot controller 7.

The robot controller 7 is a control device that controls operations of the carry-in path 2, the carry-out path 3, and the robots 4 and 5. The robot controller 7 detects the articles (positions of the articles on the carry-in belt 20) carried in through the carry-in path 2 based on the image information input from the sensor 6.

The robot controller 7 then distributes the detected articles as transfer targets to the robots 4 and 5, and causes the robots 4 and 5 to transfer the articles from the carry-in belt 20 to the place 8 on the carry-out belt 30 to be stored.

In this case, the robot controller 7 acquires information about a predetermined region (herein, the place 8) to be a destination to which the articles are transferred by the robots 4 and 5, and distributes the articles in the carry-in path 2 as the transfer targets to the robots 4 and 5, based on the acquired information.

For example, the robot controller 7 acquires the number of articles stored in the place 8, and adjusts the number of articles to be distributed to each of the robots 4 and 5 so that operation rates of the robots 4 and 5 become uniform, based on the acquired number.

Due to this, for example, it is possible to prevent a situation in which the place 8 that is already filled with the articles is conveyed to the second region 85 and the article held by the downstream robot 5 cannot be transferred to the place 8.

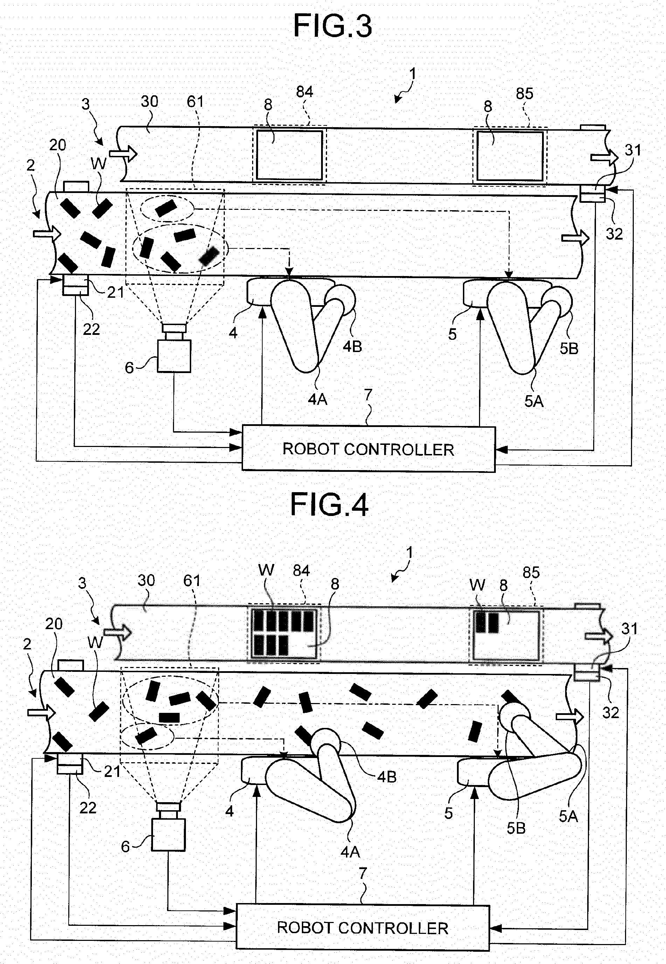

Accordingly, with the robot system 1, the article can be appropriately transferred from the carry-in path 2 into which the articles are successively carried, to the predetermined region of the carry-out path 3 through which the articles are successively carried out. A specific example of a method for distributing the articles by the robot controller 7 will be described later with reference to FIG. 3 to FIG. 7.

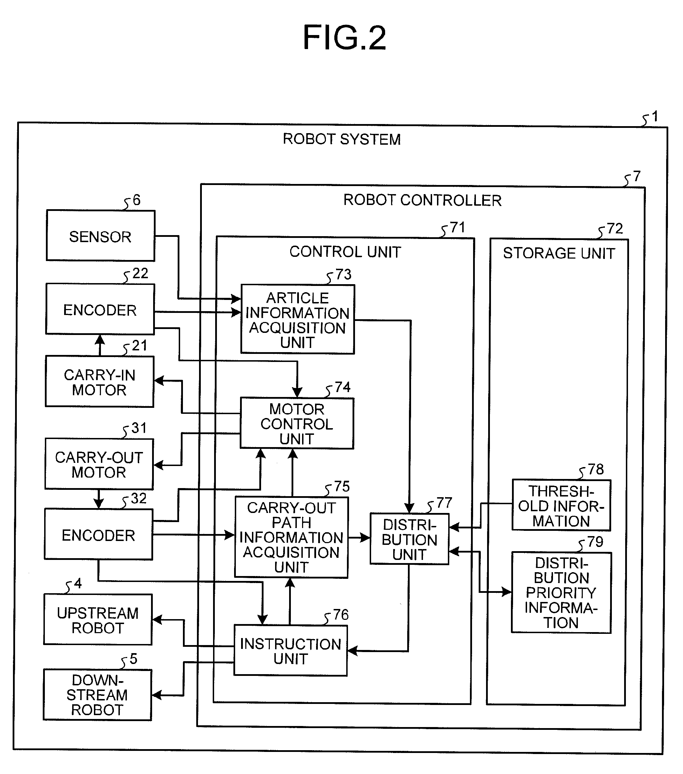

Next, the following describes a configuration of the robot system 1 with reference to FIG. 2. FIG. 2 is a block diagram illustrating the configuration of the robot system 1 according to the first embodiment. Among the components illustrated in FIG. 2, the components other than the robot controller 7 have been already described with reference to FIG. 1, so that the components are denoted by the same reference numerals as those in FIG. 1 and description thereof will not be repeated.

As illustrated in FIG. 2, the robot controller 7 includes a control unit 71 and a storage unit 72. The control unit 71 is an information processing unit that integrally controls the entire operation of the robot system 1, and includes an article information acquisition unit 73, a motor control unit 74, a carry-out path information acquisition unit 75, an instruction unit 76, and a distribution unit 77.

The storage unit 72 is a storage device that stores threshold information 78 and distribution priority information 79. The threshold information 78 stored in the storage unit 72 is information indicating a threshold to be compared with the number of articles stored in the place 8 when the control unit 71 adjusts the number of articles to be distributed to the robots 4 and 5 as the transfer targets. The distribution priority information 79 is information indicating priorities of the robots 4 and 5 to which the control unit 71 distributes the articles as the transfer targets.

The article information acquisition unit 73 is a processing unit that acquires information about the articles in the carry-in path 2 (refer to FIG. 1) and outputs the information to the distribution unit 77. The article information acquisition unit 73 receives image information of the imaging region 61 (refer to FIG. 1) defined in the carry-in path 2 input from the sensor 6, and receives a signal (pulse) indicating a rotational position of the carry-in motor 21 input from the encoder 22.

The article information acquisition unit 73 detects a two-dimensional position of the article in the imaging region 61 (refer to FIG. 1) based on the image information input from the sensor 6. The article information acquisition unit 73 then calculates a present position of the article (hereinafter, referred to as an "article position") in the carry-in path 2 to be output to the distribution unit 77 based on the detected two-dimensional position of the article in the imaging region 61 and the signal indicating the rotational position of the carry-in motor 21 input from the encoder 22 of the carry-in path 2.

The motor control unit 74 is a processing unit that controls operations of the carry-in motor 21 and the carry-out motor 31. The motor control unit 74 receives the signal indicating the rotational position of the carry-in motor 21 input from the encoder 22, the signal indicating a rotational position of the carry-out motor 31 input from the encoder 32, and an intermittent driving command input from the carry-out path information acquisition unit 75.

The motor control unit 74 then performs feedback control so that rotational speed of the carry-in motor 21 becomes desired rotational speed based on the signal indicating the rotational position of the carry-in motor 21 input from the encoder 22.

The motor control unit 74 also performs feedback control so that the rotational speed of the carry-out motor 31 during an intermittent operation becomes desired rotational speed based on the signal indicating the rotational position of the carry-out motor 31 input from the encoder 32. Each time receiving the intermittent driving command input from the carry-out path information acquisition unit 75, the motor control unit 74 rotates the carry-out motor 31 by a predetermined rotational amount to be stopped.

The carry-out path information acquisition unit 75 is a processing unit that acquires information indicating the position of the place 8 in the carry-out path 3 (refer to FIG. 1) and the number of articles stored in the place 8. The carry-out path information acquisition unit 75 receives the signal indicating the rotational position of the carry-out motor 31 input from the encoder 32, and receives an output result, which is input from the instruction unit 76, of a transfer command for the article output from the instruction unit 76 to the robots 4 and 5.

The carry-out path information acquisition unit 75 calculates and acquires the position of the place 8 in the carry-out path 3 based on the rotational position of the carry-out motor 31 input from the encoder 32. The carry-out path information acquisition unit 75 also acquires the number of articles transferred to the places 8 by the robots 4 and 5, that is, the number of articles stored in each of the places 8, based on the output result of the transfer command input from the instruction unit 76.

The carry-out path information acquisition unit 75 then outputs, to the distribution unit 77, information indicating the number of articles stored in the place 8 that is stopped in the first region 84 (refer to FIG. 1) in the carry-out path 3. The carry-out path information acquisition unit 75 outputs the intermittent driving command to the motor control unit 74 when the place 8 stopped in the second region 85 (refer to FIG. 1) in the carry-out path 3 stores the predetermined number of articles and the place 8 is filled with the articles.

The distribution unit 77 is a processing unit that distributes the articles imaged in the imaging region 61 illustrated in FIG. 1 to the robots 4 and 5 as the transfer targets. When the number of articles stored in the place 8 that is stopped in the first region 84 (refer to FIG. 1) is smaller than the threshold of the threshold information 78, the distribution unit 77 changes content of the distribution priority information 79 so that the distribution priority of the upstream robot 4 becomes higher than that of the downstream robot 5.

On the other hand, when the number of articles stored in the place 8 that is stopped in the first region 84 (refer to FIG. 1) is equal to or larger than the threshold of the threshold information 78, the distribution unit 77 changes the content of the distribution priority information 79 so that the distribution priority of the downstream robot 5 becomes higher than that of the upstream robot 4. Subsequently, the distribution unit 77 distributes the articles imaged in the imaging region 61 (refer to FIG. 1) in the carry-in path 2 to the robots 4 and 5 as the transfer targets with a distribution rate based on the distribution priority information 79.

That is, when distributing the articles conveyed to the imaging region 61 to the robots 4 and 5, the distribution unit 77 distributes, as the transfer targets, a larger number of articles to any of the robots 4 and 5 having higher distribution priority than one having lower distribution priority.

The distribution unit 77 then outputs, to the instruction unit 76, information associating each of the robots 4 and 5 determined as a distribution destination of the article with the article position of the article to be transferred by each of the robots 4 and 5. A specific example of a method for distributing the articles by the distribution unit 77 will be described later with reference to FIG. 3 to FIG. 7.

The instruction unit 76 is a processing unit that outputs instructions for various operations to the robots 4 and 5. Based on the information input from the distribution unit 77, the instruction unit 76 outputs an instruction, to the robots 4 and 5, to transfer the articles as the transfer targets from the carry-in path 2 to the place 8 in the carry-out path 3.

The instruction unit 76 receives the signal indicating the rotational position of the carry-out motor 31 input from the encoder 32. If it is determined that there is no place 8 in the first region 84 in the carry-out path 3 based on the signal indicating the rotational position of the carry-out motor 31, the instruction unit 76 outputs a transfer prohibit instruction for the article to the upstream robot 4. If it is determined that there is no place 8 in the second region 85 in the carry-out path 3, the instruction unit 76 outputs the transfer prohibit instruction for the article to the downstream robot 5.

Next, the following describes an example of the operation of the robot system 1 with reference to FIG. 3 to FIG. 7. FIG. 3 to FIG. 7 are explanatory diagrams illustrating an example of the operation of the robot system 1 according to the first embodiment. Among the components illustrated in FIG. 3 to FIG. 7, the components same as those in FIG. 1 are denoted by the same reference numerals as those in FIG. 1, and description thereof will not be repeated.

Herein, described is a case in which each of the places 8 can store ten articles W at the maximum, and the storage unit 72 stores the threshold information 78 of threshold "8" and the distribution priority information 79 in which the distribution priority of the upstream robot 4 is set to be higher than that of the downstream robot 5.

As illustrated in FIG. 3, when starting to transfer the articles W, in the robot system 1, the robot controller 7 causes the carry-out motor 31 to be driven and causes empty places 8 to be stopped in the first region 84 and the second region 85 in the carry-out path 3. Subsequently, the robot controller 7 causes the carry-in motor 21 to be driven and causes the carry-in belt 20 to start to carry in the articles W.

The robot controller 7 then acquires the number of articles W in the imaging region 61 and the article position of each of the articles W based on the image information input from the sensor 6. Herein, in the robot controller 7, the distribution priority of the upstream robot 4 is set to be higher than that of the downstream robot 5.

Due to this, for example, the robot controller 7 distributes four articles W to the upstream robot 4 as the transfer targets from among five articles W carried into the imaging region 61 as indicated by an alternate long and short dash line in FIG. 3, and distributes one article W to the downstream robot 5 as indicated by a two-dot chain line.

Subsequently, the robot controller 7 continues to perform control of preferentially distributing the article W as the transfer target to the upstream robot 4. Accordingly, in the robot system 1, the number of articles W stored in the place 8 in the first region 84 gradually increases as compared to the number of articles W stored in the place 8 in the second region 85.

As illustrated in FIG. 4, when the number of articles W stored in the place 8 in the first region 84 reaches the threshold "8", the robot controller 7 performs downstream robot preceding distribution setting. That is, the robot controller 7 changes the setting of the distribution priority information 79 so that the distribution priority of the downstream robot 5 becomes higher than the distribution priority of the upstream robot 4.

Accordingly, for example, the robot controller 7 distributes one article W to the upstream robot 4 as the transfer target from among five articles W carried into the imaging region 61 as indicated by the alternate long and short dash line in FIG. 4, and distributes four articles W to the downstream robot 5 as indicated by the two-dot chain line.

In this way, when the number of articles W transferred to one place 8 by the upstream robot 4 reaches the threshold, the downstream robot preceding distribution setting is performed in the robot system 1, so that it is possible to prevent the place 8 from being full before the place 8 is conveyed to the second region 85.

Accordingly, with the robot system 1, the article W taken out from the carry-in path 2 by the downstream robot 5 can be precisely transferred to the place 8 in the second region 85 while preventing operation efficiency of the downstream robot 5 from being reduced.

Subsequently, the robot controller 7 continues to perform control of preferentially distributing the article W as the transfer target to the downstream robot 5. Accordingly, in the robot system 1, the number of articles W stored in the place 8 in the second region 85 increases and reaches the maximum number of 10 that can be stored.

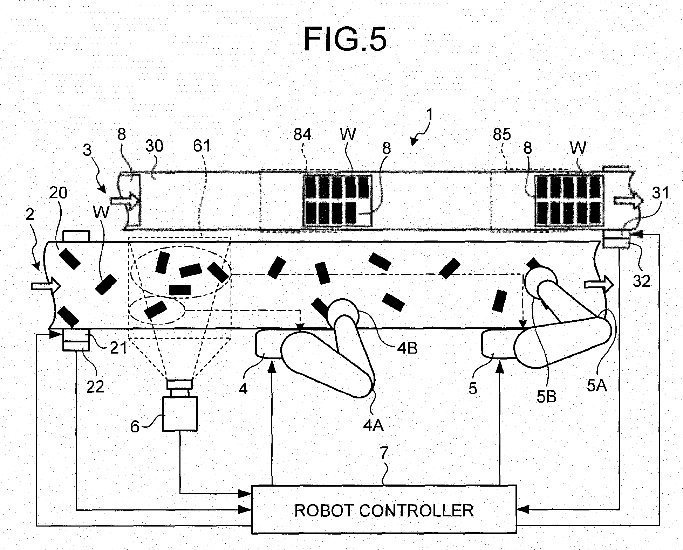

In this way, when the number of articles W stored in the place 8 in the second region 85 reaches the maximum number of 10 that can be stored, as illustrated in FIG. 5, the robot controller 7 drives the carry-out motor 31 to move each of the places 8 in the conveying direction by a predetermined distance.

Subsequently, when the robot controller 7 continues to perform control of preferentially distributing the articles W as the transfer targets to the downstream robot 5, the number of articles W transferred by the upstream robot 4 to the place 8 in the first region 84 may become smaller than the threshold "8". When such a situation continues, the operation rate of the upstream robot 4 may be reduced, and working efficiency of the entire robot system 1 may also be reduced.

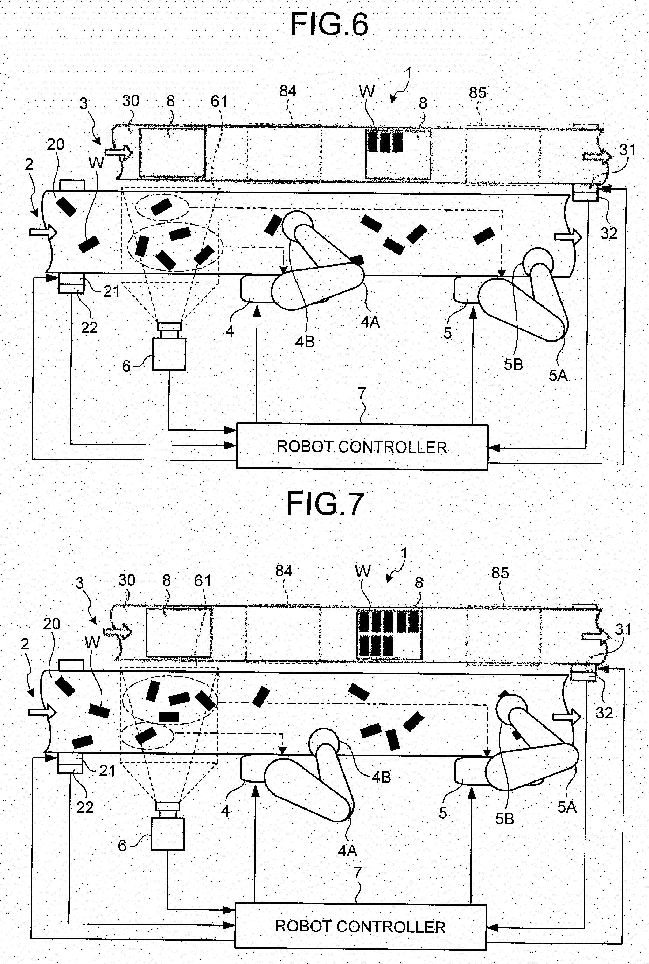

Accordingly, as illustrated in FIG. 6, when the number of articles W stored in the place 8 that is transferred to the second region 85 is smaller than the threshold "8" (herein, three), the robot controller 7 performs upstream robot preceding distribution setting. That is, the robot controller 7 changes the setting of the distribution priority information 79 so that the distribution priority of the upstream robot 4 becomes higher than the distribution priority of the downstream robot 5.

The robot controller 7 then distributes, for example, four articles W as the transfer targets to the upstream robot 4 from among five articles W carried into the imaging region 61 as indicated by the alternate long and short dash line in FIG. 6, and distributes one article W to the downstream robot 5 as indicated by the two-dot chain line.

In this way, when the number of articles W transferred to one place 8 by the upstream robot 4 is smaller than the threshold, the upstream robot preceding distribution setting is performed in the robot system 1, so that the operation rate of the upstream robot 4 can be prevented from being reduced. Accordingly, with the robot system 1, the working efficiency can be prevented from being reduced.

Subsequently, when the robot controller 7 continues to perform control of preferentially distributing the articles W as the transfer targets to the upstream robot 4, the number of articles W transferred by the upstream robot 4 to the place 8 in the first region 84 may become equal to or larger than the threshold "8". When such a situation continues, the operation rate of the downstream robot 5 may be reduced, and the working efficiency of the entire robot system 1 may also be reduced.

Accordingly, as illustrated in FIG. 7, when the number of articles W stored in the place 8 that is transferred to the second region 85 reaches the threshold "8", the robot controller 7 performs downstream robot preceding distribution setting. The robot controller 7 then distributes, for example, one article W as the transfer target to the upstream robot 4 from among five articles W carried into the imaging region 61 as indicated by the alternate long and short dash line in FIG. 5, and distributes four articles W to the downstream robot 5 as indicated by the two-dot chain line.

In this way, when the number of articles W transferred to one place 8 by the upstream robot 4 reaches the threshold, the downstream robot preceding distribution setting is performed in the robot system 1, so that the operation rate of the downstream robot 5 can be prevented from being reduced. Accordingly, with the robot system 1, the working efficiency can be prevented from being reduced.

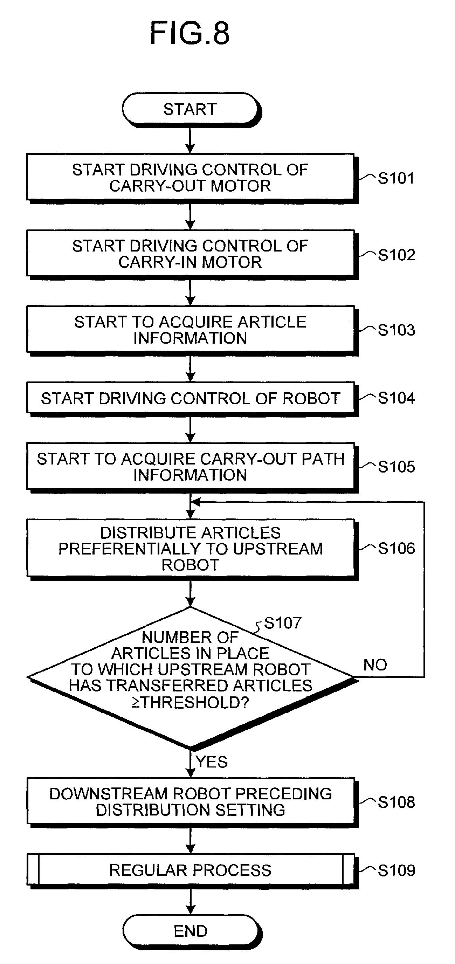

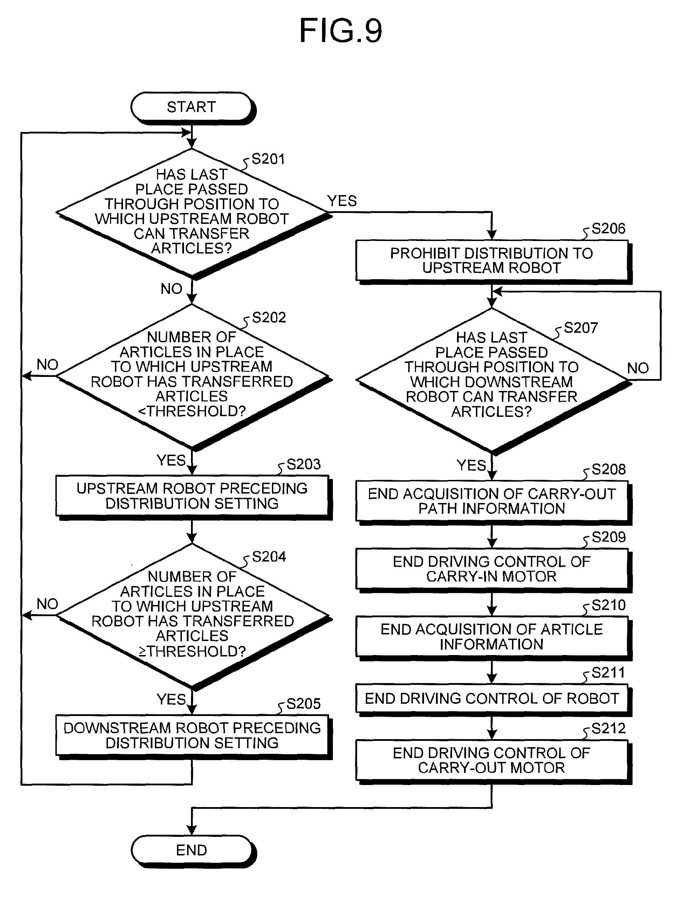

Next, the following describes a process performed by the robot controller 7 with reference to FIG. 8 and FIG. 9. FIG. 8 and FIG. 9 are flowcharts illustrating the process performed by the robot controller 7 according to the first embodiment.

As illustrated in FIG. 8, when starting to transfer the articles W, the robot controller 7 starts driving control of the carry-out motor 31 (Step S101). Specifically, first, the robot controller 7 moves empty places 8 to the first region 84 and the second region 85 in the carry-out path 3 to be stopped.

Subsequently, the robot controller 7 continues to perform control of moving each of the places 8 in the conveying direction (direction indicated by the void arrows in FIG. 1) by a predetermined distance to be stopped, each time when the maximum number of articles W that can be stored are stored in the place 8 in the second region 85. Accordingly, the empty places 8 are successively carried into the first region 84, and the places 8 are successively transferred to the second region 85 from the first region 84.

The robot controller 7 then starts driving control of the carry-in motor 21 (Step S102) and starts to acquire article information (Step S103). Due to this, the articles W are started to be carried in through the carry-in path 2, and the robot controller 7 acquires, from the sensor 6, image information of the articles W imaged in the imaging region 61 in the carry-in path 2.

Subsequently, the robot controller 7 starts driving control of the robots 4 and 5 (Step S104). The robot controller 7 then starts, for example, reading processing and the like of the threshold information 78 and the distribution priority information 79. As described above, in the distribution priority information 79 at the time when the transfer is started, the distribution priority of the upstream robot 4 is set to be higher than the distribution priority of the downstream robot 5.

Subsequently, the robot controller 7 starts to acquire carry-out path information (Step S105). Specifically, the robot controller 7 starts to acquire information about the position of each of the places 8 and the number of articles W stored in each of the places 8.

The robot controller 7 then preferentially distributes the articles W as the transfer targets to the upstream robot 4 (Step S106), and determines whether the number of articles W in the place 8 to which the upstream robot 4 has transferred the articles W is equal to or larger than the threshold (Step S107).

If it is determined that the number of articles W in the place 8 to which the upstream robot 4 has transferred the articles W is smaller than the threshold (No at Step S107), the process for the robot controller 7 proceeds to Step S106.

On the other hand, if it is determined that the number of articles W in the place 8 to which the upstream robot 4 has transferred the articles W is equal to or larger than the threshold (Yes at Step S107), the robot controller 7 performs downstream robot preceding distribution setting (Step S108). The robot controller 7 then performs a regular process illustrated in FIG. 9 (Step S109) and ends the process.

When the regular process is started, as illustrated in FIG. 9, the robot controller 7 determines whether the last place 8 that is carried in, among the places 8 prepared in advance, has passed through the position (first region 84) to which the upstream robot 4 can transfer the articles W (Step S201).

If it is determined that the last place 8 has passed through the first region 84 (Yes at Step S201), the process for the robot controller 7 proceeds to Step S206. On the other hand, if it is determined that the last place 8 has not passed through the first region 84 (No at Step S201), the process for the robot controller 7 proceeds to Step S202.

At Step S202, the robot controller 7 determines whether the number of articles is smaller than the threshold in the place 8 to which the upstream robot 4 has transferred the articles W, that is, the place 8 that has passed through the first region 84. If it is determined that the number of articles in the place 8 that has passed through the first region 84 is not smaller than the threshold (No at Step S202), the process for the robot controller 7 proceeds to Step S201.

On the other hand, if it is determined that the number of articles in the place 8 that has passed through the first region 84 is smaller than the threshold (Yes at Step S202), the robot controller 7 performs upstream robot preceding distribution setting (Step S203). Subsequently, the robot controller 7 determines whether the number of articles is equal to or larger than the threshold in the place 8 to which the upstream robot 4 has transferred the articles W, that is, the place 8 that has passed through the first region 84 (Step S204).

If it is determined that the number of articles in the place 8 that has passed through the first region 84 is not equal to or larger than the threshold (No at Step S204), the process for the robot controller 7 proceeds to Step S201. On the other hand, if it is determined that the number of articles in the place 8 that has passed through the first region 84 is equal to or larger than the threshold (Yes at Step S204), the robot controller 7 performs downstream robot preceding distribution setting (Step S205) and the process proceeds to Step S201.

At Step S201, if it is determined that the last place 8 has passed through the position (first region 84) to which the upstream robot 4 can transfer the articles (Yes at Step 201), the robot controller 7 prohibits distribution of the articles W to the upstream robot 4 (Step S206).

Subsequently, the robot controller 7 determines whether the last place 8 has passed through the position (second region 85) to which the downstream robot 5 can transfer the articles (Step S207). In this case, if it is determined that the last place 8 has not passed through the second region 85 (No at Step S207), the robot controller 7 repeats the determination processing at Step S207 until the last place 8 passes through the second region 85.

If it is determined that the last place 8 has passed through the second region 85 (Yes at Step S207), the robot controller 7 ends the acquisition of the carry-out path information (Step S208), and ends the driving control of the carry-in motor 21 (Step S209).

The robot controller 7 then ends the acquisition of the article information (Step S210), ends the driving control of the robots 4 and 5 (Step S211), and ends the driving control of the carry-out motor 31 (Step S212) to end the process.

As described above, the robot system according to the first embodiment includes the robots, the information acquisition unit, and the distribution unit. The robots transfer the articles from the carry-in path into which the articles are successively carried, to a predetermined region of the carry-out path through which the articles are successively carried out.

The information acquisition unit acquires information about the predetermined region. The distribution unit distributes the articles in the carry-in path as the transfer targets to the robots based on the information acquired by the information acquisition unit. With such a configuration, the robot system according to the first embodiment can appropriately transfer the articles from the carry-in path into which the articles are successively carried, to the predetermined region of the carry-out path through which the articles are successively carried out.

### Second embodiment

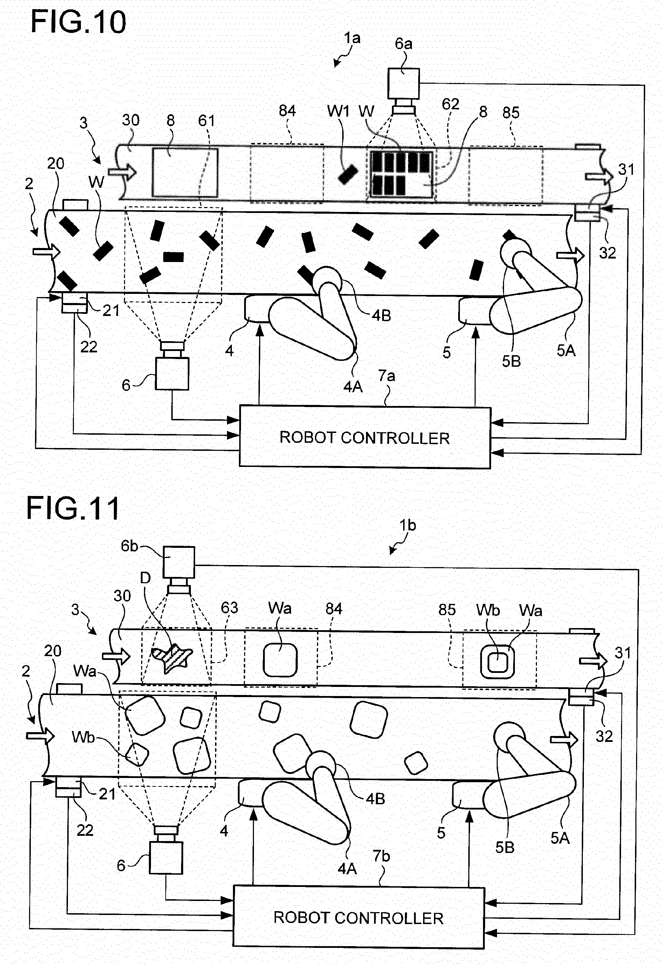

Next, the following describes a robot system 1a according to a second embodiment with reference to FIG. 10. FIG. 10 is an explanatory diagram illustrating the robot system 1a according to the second embodiment. Among the components of the robot system 1a, the components same as those in FIG. 1 are denoted by the same reference numerals as those in FIG. 1, and description thereof will not be repeated.

The robot system 1a illustrated in FIG. 10 is different from the robot system 1 illustrated in FIG. 1 in that the robot system 1a further includes a sensor 6a that detects the articles W in the place 8 conveyed between the first region 84 and the second region 85 in the carry-out path 3, and in control contents of the robots 4 and 5 by a robot controller 7a.

In this case, for example, the sensor 6a is an imaging device that images the place 8 conveyed in the imaging region 62 that is defined between the first region 84 and the second region 85, and outputs image information of the imaged image to the robot controller 7a.

In addition to the function of the robot controller 7 illustrated in FIG. 1, the robot controller 7a determines the number of articles W in the place 8 based on the image information input from the sensor 6a, and distributes the articles W as the transfer targets to the robots 4 and 5 corresponding to the determined number of articles W.

In the robot system 1a, for example, when the upstream robot 4 fails to transfer an article W1 to the place 8 and the article W1 is dropped on the carry-out belt 30, the robot controller 7a can recognize that the article W1 is not stored in the place 8.

Due to this, the robot controller 7a can more accurately acquire the number of articles W in the place 8 to be transferred to the second region 85, so that the robot controller 7a can more appropriately distribute the articles W as the transfer targets to the robots 4 and 5.

As described above, with the robot system according to the second embodiment, it is possible to more accurately acquire the number of articles in the predetermined region as a transfer destination of the articles, so that the articles as the transfer targets can be more appropriately distributed to each of the robots.

In the robot system 1a described above, the number of articles W in the place 8 is detected based on the image information of the place 8 that stores the articles W. Alternatively, the robot system 1a may measure a weight of the place 8 that stores the articles W to detect the number of articles W in the place 8 based on the weight.

### Third embodiment

Next, the following describes a robot system 1b according to a third embodiment with reference to FIG. 11. FIG. 11 is an explanatory diagram illustrating the robot system 1b according to the third embodiment. Among the components of the robot system 1b, the components same as those in FIG. 1 are denoted by the same reference numerals as those in FIG. 1, and description thereof will not be repeated.

The robot system 1b illustrated in FIG. 11 is a system that transfers a first article Wa, from among the first article Wa and a second article Wb that are carried in through the carry-in path 2, onto the carry-out belt 30 of the carry-out path 3, and places the second article Wb on the transferred first article Wa to be successively carried out.

The robot system 1b is different from the robot system 1 illustrated in FIG. 1 in that the robot system 1b further includes a sensor 6b that detects a state of the carry-out belt 30 on the upstream side of the first region 84 in the carry-out path 3, and in control contents of the robots 4 and 5 by a robot controller 7b.

In this case, for example, the sensor 6b is an imaging device that images the imaging region 63 defined on the upstream side of the first region 84 in the carry-out path 3, and outputs image information of the imaged image to the robot controller 7b.

The robot controller 7b determines the state of the carry-out belt 30 based on the image information input from the sensor 6b. For example, when detecting contamination D on the carry-out belt 30, the robot controller 7b calculates a present position of the contamination D based on a signal indicating the rotational position of the carry-out motor 31 input from the encoder 32 of the carry-out path 3.

Subsequently, when the contamination D is moved to the first region 84 in the carry-out path 3, the robot controller 7b outputs a transfer prohibit instruction for the first article Wa and the second article Wb to the upstream robot 4. Similarly, when the contamination D is moved to the second region 85 in the carry-out path 3, the robot controller 7b outputs the transfer prohibit instruction to the downstream robot 5.

Accordingly, for example, when transferring an article to which the contamination D should not be attached, such as food or a precision device, from the carry-in path 2 to the carry-out path 3, the robot system 1b can prevent the contamination D on the carry-out belt 30 from being attached to the article as the transfer target.

The robot controller 7b may also be configured to detect a state other than the contamination D, such as unevenness or inclination of the carry-out belt 30, based on the image information input from the sensor 6b. With such a configuration, it is possible to prevent an article that should be horizontally placed on the carry-out belt 30 from being transferred to a position in a state that is not preferable as a transfer destination on the carry-out belt 30.

As described above, with the robot system according to the third embodiment, it is possible to prevent the article from being transferred to a position that is not preferable as a transfer destination of the article on the carry-out path.

### Fourth embodiment

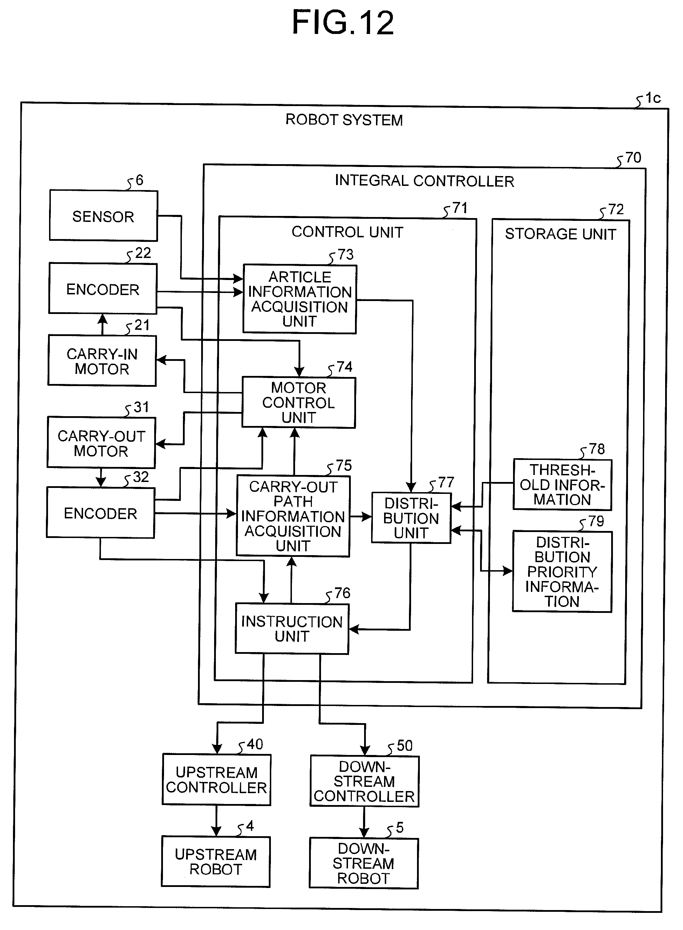

Next, the following describes a robot system 1c according to a fourth embodiment with reference to FIG. 12. FIG. 12 is an explanatory diagram illustrating the configuration of the robot system 1c according to the fourth embodiment. Among the components of the robot system 1c, the components same as those of the robot system 1 illustrated in FIG. 2 are denoted by the same reference numerals as those in FIG. 2, and description thereof will not be repeated.

As illustrated in FIG. 12, the robot system 1c includes an upstream controller 40 that controls the upstream robot 4, a downstream controller 50 that controls the downstream robot 5, and an integral controller 70 that integrally controls the upstream controller 40 and the downstream controller 50.

The integral controller 70 has a configuration similar to that of the robot controller 7 illustrated in FIG. 2. That is, the integral controller 70 distributes the articles W as the transfer targets to the robots 4 and 5 corresponding to the number of articles W in the place 8 in the carry-out path 3.

The integral controller 70 then provides, to the upstream controller 40, the article position of the article W to be transferred by the upstream robot 4, and provides, to the downstream controller 50, the article position of the article W to be transferred by the downstream robot 5.

The upstream controller 40 causes the upstream robot 4 to transfer, to the place 8, the article W the article position of which is provided from the integral controller 70. Similarly, the downstream controller 50 causes the downstream robot 5 to transfer, to the place 8, the article W the article position of which is provided from the integral controller 70.

With such a configuration, for example, when a controller is provided to each of the robots in the existing robot system, it is possible to distribute the articles corresponding to the number of articles in the place by providing the host integral controller 70 illustrated in FIG. 12 for the controllers.

As described above, according to the fourth embodiment, it is possible to distribute the articles to be transferred by each robot corresponding to the number of articles in the place, only by providing the integral controller 70 illustrated in FIG. 12 to the existing robot system in which the controller is provided for each robot.

In the first to fourth embodiments described above, the number of robots 4 and 5 is two. Alternatively, the number of robots 4 and 5 may be three or more. In such a case, the articles W as the transfer targets are distributed to each robot so that the operation rates of the robots become uniform, based on the number of articles W in the place 8 that is conveyed to a position to be a transfer destination of each robot.

In the first to fourth embodiments described above, a value stored as the threshold information 78 is fixed. Alternatively, the value stored as the threshold information 78 may be arbitrarily changed so as to improve a success rate of transferring the article W by the robots 4 and 5.

Additional advantages and modifications will readily occur to those skilled in the art. Therefore, the invention in its broader aspects is not limited to the specific details and representative embodiments shown and described herein. Accordingly, various modifications may be made without departing from the spirit or scope of the general inventive concept as defined by the appended claims and their equivalents.

### Reference Signs List

- 1, 1a, 1b, and 1c: Robot system
- 2: Carry-in path
- 20: Carry-in belt
- 21: Carry-in motor
- 22: Encoder
- 3: Carry-out path
- 30: Carry-out belt
- 31: Carry-out motor
- 32: Encoder
- 4: (Upstream) robot
- 40: Upstream controller
- 5: (Downstream) robot
- 4A and 5A: Robot arm
- 4B and 5B: End effector
- 50: Downstream controller
- 6, 6a, and 6b: Sensor
- 61, 62, and 63: Imaging region
- 7, 7a, and 7b: Robot controller
- 70: Integral controller
- 71: Control unit
- 72: Storage unit
- 73: Article information acquisition unit
- 74: Motor control unit
- 75: Carry-out path information acquisition unit
- 76: Instruction unit
- 77: Distribution unit
- 78: Threshold information
- 79: Distribution priority information
- 8: Place
- W and W1: Article
- Wa: First article
- Wb: Second article

## Claims

1. A robot system comprising:
a plurality of robots that transfer articles from a carry-in path into which the articles are successively carried, to a predetermined region of a carry-out path through which the articles are successively carried out;
an information acquisition unit that acquires information about the predetermined region; and
a distribution unit that distributes the articles in the carry-in path as transfer targets to the robots based on the information acquired by the information acquisition unit.

2. The robot system according to claim 1, further comprising:
an instruction unit that outputs a prohibit instruction for prohibiting the robot from transferring the articles when there is no predetermined region at a position to which the robot is capable of transferring the articles.

3. The robot system according to claim 1 or 2, wherein the information about the predetermined region includes information indicating the volume of articles transferred to the predetermined region.

4. The robot system according to any one of claims 1 to 3, wherein the information about the predetermined region includes information indicating a state of the predetermined region.

5. An article transfer method comprising:
transferring articles, by a plurality of robots, from a carry-in path into which the articles are successively carried, to a predetermined region of a carry-out path through which the articles are successively carried out;
acquiring information about the predetermined region using an information acquisition unit; and
distributing the articles in the carry-in path as transfer targets to the robots using a distribution unit based on the information acquired by the information acquisition unit.
